# EUROPÄISCHE PATENTSCHRIFT

(11) **EP 1 759 779 B1**
(45) Veröffentlichungstag und Bekanntmachung des Hinweises auf die Patenterteilung: **31.03.2010**
(21) Anmeldenummer: 06015743.5
(22) Anmeldetag: 28.07.2006
(51) Int. Cl.: B21C 37/08

(54) **Verfahren zur Herstellung eines aufweitbaren, geschweissten Rohres, insbesondere für einen mechanisch gefügten Wärmetauscher**
Method for the manufacture of an expandable, welded tube, in particular for a mechanically joined heat-exchanger
Procédé pour la fabrication d''un tuyau expansible soudé, en particulier pour un échangeur de chaleur assemblé mécaniquement

(30) Priorität: 02.09.2005 DE 102005042045
(43) Veröffentlichungstag der Anmeldung: 07.03.2007
(73) Patentinhaber: Behr GmbH & Co. KG, 70469 Stuttgart (DE)
(72) Erfinder: Kramer, Wolfgang, Dr.-Ing., 71384 Weinstadt (DE)
(74) Vertreter: Mantel, Berthold Friedrich

(56) Entgegenhaltungen:
- WO-A-91/01839
- DE-B- 1 080 052
- JP-A- 3 254 316
- JP-A- 63 123 526
- JP-A- 2004 255 414
- US-A1- 2004 099 644

## Beschreibung

Die Erfindung betrifft ein Verfahren zur Herstellung eines aufweitbaren, geschweißten Rohres, insbesondere für einen mechanisch gefügten Wärmetauscher, insbesondere einen Kühlmittelkühler, wie er bei Kraftfahrzeugen verwendet wird, gemäß dem Oberbegriff des Anspruches 1, ein solches Verfahren ist aus der JP-A-03 254 316 bekannt.

Bei mechanisch gefügten Kühlmittelkühlem, wobei die einzelnen Teile des Wärmetauschers wie Rohre, Rippen, Rohrböden und Sammel- oder Wasserkästen nicht stoffschlüssig, sondem mit mechanischen Mitteln gefügt werden, werden üblicherweise extrudierte Rohre verwendet, da auf Grund des inneren Überstandes der Schweißnaht, welcher den Aufweitprozess in Form von ungleichmäßigen Aufweitungen und Rissbildungen des Rohres behindert, bislang keine geschweißten Rohre verwendet werden können. Bei mechanisch gefügten Systemen weisen die Rohre häufig einen kreisrunden, ovalen oder elliptischen bzw. flachovalen Querschnitt auf. Die Rohre werden mechanisch gegenüber den Rippen und den Rohrböden aufgeweitet, so dass eine hinreichende Pressung erzielt wird, welche bei der Rohr/Bodenverbindung die erforderliche Dichtheit und bei der Rohr/Rippenverbindung den erforderlichen thermischen Kontakt herstellt. Das Aufweiten erfolgt üblicherweise durch einen olivenförmigen Dorn, welcher eine plastische Verformung des Rohres gegenüber den Rippen- oder Bodendurchzügen bewirkt, welche nach der Aufweitung elastisch am Außenumfang des Rohres anliegen. Ein derartiger mechanisch gefügter Wärmetauscher lässt noch Wünsche offen, insbesondere in Hinblick auf die Möglichkeit der Verwendung kostengünstigerer Rohre.

Ausgehend von diesem Stand der Technik ist es Aufgabe der Erfindung, ein Verfahren zur Verfügung zu stellen, mit Hilfe dessen auch kostengünstigere, geschweißte Rohre aufgeweitet werden können, so dass diese auch bei mechanisch gefügten Wärmetauschern verwendet werden können. Diese Aufgabe wird gelöst durch ein Verfahren mit den Merkmalen des Anspruchs 1, sowie ein geschweistes Rohr mit den Merkmalen des Anspruchs 5. Vorteilhafte Weiterbildungen sind Gegenstand der Unteransprüche.

Erfindungsgemäß ist ein Verfahren zum Herstellen aufweitbarer, geschweißter Rohre vorgesehen, wobei nach dem Schweißen der Überstand der Schweißnaht auf der Rohraußenseite entfernt und im Bereich der Schweißnaht eine Nut gebildet wird. Durch das Entfernen von Material der Schweißnaht wird die Wandstärke des Rohres einschließlich der Materialstärke der Schweißnaht nahezu konstant.

Die Nut wird vorzugsweise mittels Schabens mit Hilfe eines Schabestahls hergestellt. Dabei wird der Überstand der Schweißnaht zuzüglich etwas weiteren Materials entfernt, so dass die Nut im Wesentlichen der Gestalt des verbleibenden Überstands auf der Rohrinnenseite entspricht. Die Übergänge von Rohr zur Schweißnaht/Nut sind abgerundet, um Kerbspannungen beim Aufweiten zu verhindern oder zumindest zu minimieren.

Die Nut wird durch das Entfernen des Überstandes zuzüglich zusätzlichen Materials auf der Außenseite gebildet, wobei die Materialstärke der Schweißnaht derart verringert wird, dass die Schweißnaht durchgehend eine der Wandstärke des Rohres entsprechende Dicke +/- 20%, insbesondere bevorzugt +/-10% oder weniger, aufweist.

Die Schweißnahtbreite entspricht vorzugsweise 0,05 bis 4-mal, insbesondere bevorzugt 0,1 bis 2-mal der Wandstärke des Rohres.

Der Schweißnaht-Überstand entspricht vorzugsweise 0 bis 1-mal, insbesondere bevorzugt 0,2 bis 0,8-mal, insbesondere ca. 0,5-mal, der Wandstärke des Rohres.

Die Wandstärke des Rohres beträgt vorzugsweise 0,1 bis 1 mm, insbesondere 0,2 bis 0,5 mm, besonders bevorzugt 0,3 bis 0,4 mm.

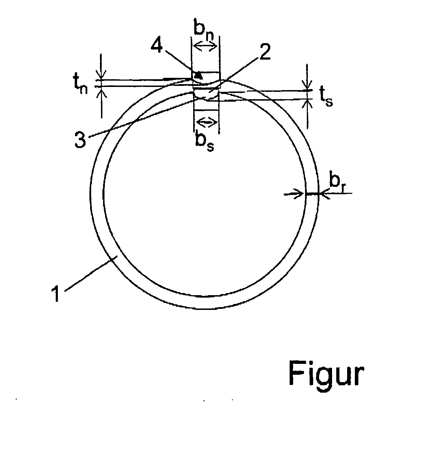

Im Folgenden wird die Erfindung anhand eines Ausführungsbeispiels unter Bezugnahme auf die Zeichnung, im Einzelnen erläutert. Die einzige Figur der Zeichnung zeigt einen Schnitt durch ein geschweißtes Rohr, das auf erfindungsgemäße Weise bearbeitet wird.

Ein geschweißtes Rohr 1 weist im Bereich seiner Schweißnaht 2 innen und außen einen gewissen Überstand 3 auf. Nach dem Schweißen erfolgt ein Schaben der Schweißnaht 2 mit Hilfe eines Schabestahls, wobei der Schweißnaht-Überstand 3, der beim Schweißprozess entstanden ist, entfernt wird. Dabei wird vom Schabestahl eine Nut 4 geschabt, die der Negativform des auf der Rohrinnenseite liegenden Schweißnaht-Überstandes 3 entspricht, so dass das Rohr 1 auch nach dem Schweißen eine konstante Materialdicke über den gesamten Umfang aufweist, wenn damit auch keine vollständig kreisförmige Gestalt mehr besteht.

Das Rohr 1 weist vorliegend eine Wandstärke wᵣ von 0,4 mm, eine Schweißnahtbreite bₛ von ebenfalls 0,4 mm, einen Schweißnaht-Überstand tₛ von 0,2 mm. Die Nutbreite 4 bₙ entspricht im Wesentlichen der Schweißnahtbreite bₛ, die Nuttiefe 4 tₙ entspricht im Wesentlichen dem Schweißnaht-Überstand tₛ.

Das Rohr 1 ist vorliegend auf der Innenseite aus Korrosionsschutzgründen plattiert. Diese Plattierung wird durch die Außenbearbeitung sowie das nachfolgende Aufweiten des Rohres 1 nicht wesentlich beschädigt.

## Patentansprüche

1. Verfahren zum Herstellen aufweitbarer, geschweißter Rohre, wobei nach dem Schweißen der Überstand (3) der Schweißnaht (2) auf der Rohraußenseite entfernt wird, **dadurch gekennzeichnet, dass** im Bereich der Schweißnaht (2) eine Nut (4) gebildet wird.

2. Verfahren nach Anspruch 1, **dadurch gekennzeichnet, dass** die Nut (4) mittels Schabens hergestellt wird.

3. Verfahren nach Anspruch 1 oder 2, **dadurch gekennzeichnet, dass** die Nut (4) die Materialstärke der Schweißnaht (2) derart verringert, dass die Schweißnaht (2) durchgehend eine der Wandstärke (wᵣ) des Rohres (1) entsprechende Dicke +/- 20% aufweist.

4. Verfahren nach einem der vorhergehenden Ansprüche, **dadurch gekennzeichnet, dass** die Nut (4) die Materialstärke der Schweißnaht (2) derart verringert, dass die Schweißnaht (2) durchgehend eine der Wandstärke (wᵣ) des Rohres (1) entsprechende Dicke +/- 10% aufweist.

5. Geschweißtes Rohr mit einer Schweißnaht (2), wobei der Überstand (3) der Schweißnaht (2) auf der Rohraußenseite entfernt ist, **dadurch gekennzeichnet, dass** im Bereich der Schweißnaht (2) eine in Längsrichtung der Schweißnaht (2) verlaufende Nut (4) ausgebildet ist und die Wandstärke (wᵣ) des Rohres (1) einschließlich der Materialstärke der Schweißnaht (2) konstant ist +/- 20%, insbesondere +/- 10%.

6. Geschweißtes Rohr nach Anspruch 5, **dadurch gekennzeichnet, dass** die Schweißnahtdicke der Wandstärke (wᵣ) des Rohres (1) entspricht +/- 20%, insbesondere +/- 10%.

7. Geschweißtes Rohr nach einem der Ansprüche 5 bis 6, **dadurch gekennzeichnet, dass** die Schweißnahtbreite (bₛ) 0,05 bis 4-mal, insbesondere 0,1 bis 2-mal, die Wandstärke (wᵣ) des Rohres (1) aufweist.

8. Geschweißtes Rohr nach einem der Ansprüche 5 bis 7, **dadurch gekennzeichnet, dass** der Schweißnaht-Überstand (tₛ) 0 bis 1-mal, insbesondere 0,2 bis 0,8-mal Wandstärke (wᵣ) des Rohres (1) entspricht.

9. Geschweißtes Rohr nach einem der Ansprüche 5 bis 8, **dadurch gekennzeichnet, dass** der Schweißnaht-Überstand (tₛ) der Nuttiefe (tₙ) entspricht, +/- 20%, insbesondere +/- 10%.

10. Geschweißtes Rohr nach einem der Ansprüche 5 bis 9, **dadurch gekennzeichnet, dass** die Wandstärke (wᵣ) des Rohres (1) 0,2 bis 0,5 mm beträgt.

11. Wärmetauscher **gekennzeichnet durch** mindestens ein Rohr nach einem der Ansprüche 5 bis 10.

## Claims

1. Method for producing expandable welded tubes, wherein the protruding part (3) of the weld (2) remaining on the outside of the tube is removed after the welding process, **characterised in that** a groove (4) is formed in the region of the weld (2).

2. Method according to claim 1, **characterised in that** the groove (4) is produced by scraping.

3. Method according to claim 1 or 2, **characterised in that** the groove (4) reduces the material thickness of the weld (2) such that the weld (2) has a thickness equal to the wall thickness (wᵣ) of the tube (1) +/- 20% throughout.

4. Method according to any of the preceding claims, **characterised in that** the groove (4) reduces the material thickness of the weld (2) such that the weld (2) has a thickness equal to the wall thickness (wᵣ) of the tube (1) +/-10% throughout.

5. Welded tube with a weld (2), wherein the protruding part (3) of the weld (2) remaining on the outside of the tube is removed, **characterised in that** a groove (4) extending in the longitudinal direction is formed in the region of the weld (2), and **in that** the wall thickness (wᵣ) of the tube (1) including the material thickness of the weld is constant +/- 20%, in particular +/-10%.

6. Welded tube according to claim 5, **characterised in that** the thickness of the weld is equal to the wall thickness (wᵣ) of the tube (1) +/- 20%, in particular +/- 10%

7. Welded tube according to claim 5 or 6, **characterised in that** the width of the weld (bₛ) is 0.05 to 4 times, in particular 0.1 times to twice, the wall thickness (wᵣ) of the tube (1).

8. Welded tube according to any of claims 5 to 7, **characterised in that** the protruding part of the weld (tₛ) is 0 to 1 times, in particular 0.2 to 0.8 times, the wall thickness (wᵣ) of the tube (1).

9. Welded tube according to any of claims 5 to 8, **characterised in that** the protruding part of the weld (tₛ) is equal to the depth of the groove (tₙ) +/- 20%, in particular +/- 10%.

10. Welded tube according to any of claims 5 to 8, **characterised in that** the wall thickness (wᵣ) of the tube (1) is 0.2 to 0.5 mm.

11. Heat exchanger, **characterised by** at least one tube according to any of claims 5 to 10.

## Revendications

1. Procédé de fabrication de tubes soudés élargissables où, après le soudage, la partie saillante (3) du cordon de soudure (2) formée sur le côté extérieur du tube est enlevée,
**caractérisé en ce qu'**une rainure (4) est formée dans la zone du cordon de soudure (2).

2. Procédé selon la revendication 1, **caractérisé en ce que** la rainure (4) est réalisée par grattage.

3. Procédé selon la revendication 1 ou 2, **caractérisé en ce que** la rainure (4) diminue l'épaisseur de matériau du cordon de soudure (2), de manière telle que le cordon de soudure (2) présente, de façon continue, une épaisseur correspondant à l'épaisseur de paroi (wᵣ) du tube (1), avec des variations de +/- 20 %.

4. Procédé selon l'une quelconque des revendications précédentes, **caractérisé en ce que** la rainure (4) diminue l'épaisseur de matériau du cordon de soudure (2), de manière telle que le cordon de soudure (2) présente, de façon continue, une épaisseur correspondant à l'épaisseur de paroi (wᵣ) du tube (1), avec des variations de +/- 10 %.

5. Tube soudé comprenant un cordon de soudure (2), où la partie saillante (3) du cordon de soudure (2) formée sur le côté extérieur du tube est enlevée, **caractérisé en ce qu'**une rainure (4) s'étendant dans le sens longitudinal du cordon de soudure (2) est configurée dans la zone du cordon de soudure (2), et l'épaisseur de paroi (wᵣ) du tube (1), y compris l'épaisseur de matériau du cordon de soudure (2), est constante, avec des variations de +/- 20 %, en particulier de +/- 10 %.

6. Tube soudé selon la revendication 5, **caractérisé en ce que** l'épaisseur du cordon de soudure correspond à l'épaisseur de paroi (wᵣ) du tube (1), avec des variations de +/- 20 %, en particulier de +/- 10 %.

7. Tube soudé selon l'une des revendications 5 ou 6, **caractérisé en ce que** la largeur (bₛ) du cordon de soudure est de 0,05 fois à 4 fois, en particulier de 0,1 fois à 2 fois égale à l'épaisseur de paroi (wᵣ) du tube (1).

8. Tube soudé selon l'une quelconque des revendications 5 à 7, **caractérisé en ce que** la partie saillante (tₛ) du cordon de soudure est de 0 fois à 1 fois, en particulier de 0,2 fois à 0,8 fois égale à l'épaisseur de paroi (wᵣ) du tube (1).

9. Tube soudé selon l'une quelconque des revendications 5 à 8, **caractérisé en ce que** la partie saillante (tₛ) du cordon de soudure correspond à la profondeur (tₙ) de la rainure, avec des variations de +/- 20 %, en particulier de +/- 10 %.

10. Tube soudé selon l'une quelconque des revendications 5 à 9, **caractérisé en ce que** l'épaisseur de paroi (wᵣ) du tube (1) est comprise entre 0,2 mm et 0,5 mm.

11. Echangeur de chaleur **caractérisé par** au moins un tube selon l'une quelconque des revendications 5 à 10.
